# EUROPÄISCHE PATENTSCHRIFT

(11) **EP 3 133 792 B1**
(45) Veröffentlichungstag und Bekanntmachung des Hinweises auf die Patenterteilung: **15.04.2020**
(21) Anmeldenummer: 16183485.8
(22) Anmeldetag: 10.08.2016
(51) Int. Cl.: H04L 29/06

(54) **VERFAHREN ZUR SICHEREN ÜBERMITTLUNG VON DATEN AUS EINER GESICHERTEN UMGEBUNG AN EIN FELDGERÄT**
METHOD FOR SECURE TRANSFER OF DATA FROM A PROTECTED ENVIRONMENT TO A FIELD DEVICE
PROCÉDÉ DE TRANSMISSION SURE DE DONNÉES À PARTIR D'UN ENVIRONNEMENT SECURITÉ À UN APPAREIL DE TERRAIN

(30) Priorität: 17.08.2015 CH 11772015
(43) Veröffentlichungstag der Anmeldung: 22.02.2017
(73) Patentinhaber: cerrom engineering gmbh, 7220 Schiers (CH)
(72) Erfinder: Möhle, Frank, 7220 Schiers (CH)
(74) Vertreter: Riederer Hasler & Partner Patentanwälte AG

(56) Entgegenhaltungen:
- EP-A2- 2 706 723
- US-A1- 2012 061 458
- US-A1- 2014 139 732
- KUNDUR D ET AL: "Security and Privacy for Distributed Multimedia Sensor Networks", PROCEEDINGS OF THE IEEE, IEEE. NEW YORK, US, Bd. 96, Nr. 1, 1. Januar 2008 (2008-01-01) , Seiten 112-130, XP011507656, ISSN: 0018-9219, DOI: 10.1109/JPROC.2007.909914

## Beschreibung

### Technisches Gebiet

Die Erfindung betrifft ein Verfahren zur sicheren elektronischen Übermittlung von Daten von einem Quellgerät an ein Zielgerät. Das Verfahren eignet sich insbesondere dazu, Daten aus einer gesicherten Umgebung an ein Feldgerät über öffentliche, fremde und/oder ungesicherte Systeme und Netzwerke zu übermitteln.

### Stand der Technik

In Firmen und anderen Organisationen spielen geheime Daten, insbesondere in der Form von Dokumenten, oft eine zentrale Rolle. Bei solchen geheimen Daten kann es sich zum Beispiel um Konstruktionspläne, Lagebeurteilungen oder auch um Geheimdienstinformationen handeln.

Solange sich die Dokumente innerhalb der Organisation oder in physischem Besitz eines Mitarbeiters der Organisation befinden, gelten sie als sicher. Der Austausch der Dokumente innerhalb der Organisation kann ebenfalls als sicher angesehen werden. Müssen die Dokumente allerdings von der Organisation an eine Aussenstelle oder an einen Mitarbeiter im Aussendienst übermittelt werden, ergeben sich grosse Herausforderungen hinsichtlich der Sicherheit, da auch VPNs ("virtual private networks") oder Kuriere nicht als absolut sicher gelten können.

Insbesondere werden die Sicherheitsanforderungen an mobile, elektronische Lesegeräte wie Laptops, Smartphones oder Tablet-Computer als praktisch unerfüllbar angesehen, da immer neue und raffiniertere Angriffsmethoden entwickelt werden, die die Offenlegung von geheimen Dokumenten auf diesen Geräten ermöglichen.

Weiter scheint es aus heutiger Sicht fast unmöglich, ein geheimes Dokument in einer Aussenstelle oder unterwegs auszudrucken.

Grundsätzlich muss damit gerechnet werden, dass jede Hardware, jedes Betriebssystem und jede Software kompromittiert sind. Dies kann entweder durch bewusst konstruierte Schadprogramme geschehen sein oder aber auch auf Fehlern beruhen, die durch Angreifer ausgenutzt werden.

Um nun eine ähnlich gute Vertraulichkeit für die Einsicht in elektronische Dokumente zu gewährleisten, wie dies bei Dokumenten auf Papier der Fall ist, muss sichergestellt werden, dass das Lesegerät nie mit der Aussenwelt kommunizieren kann. Dies steht jedoch im Widerspruch zum Bedürfnis, einem Mitarbeiter im Aussendienst bzw. einem Mitarbeiter an einer Aussenstelle ein Dokument übermitteln zu können. Gleiches gilt für den umgekehrten Weg: Es ist für einen Mitarbeiter im Aussendienst bzw. einen Mitarbeiter an einer Aussenstelle mit den heutigen Methoden praktisch unmöglich, ein geheimes Dokument zu erstellen und dieses sicher an den Adressaten zu übermitteln.

Eine von einem Patentamt durchgeführte Recherche hat folgende Dokumente zu Tage gefördert: EP2706723A2, US2014/0139732A1 und Kundur, D. et al.: "Security and Privacy for Distributed Multimedia Sensor Networks", Proceedings of the IEEE, IEEE. New York, US, Bd. 96, Nr. 1, 01.01.2008, S.112-130.

Die EP2706723A2 und US2014/0139732A1 lehren Verfahren zur Übertragung von Videomaterial, wobei ein eingehender Videostream über eine unidirektionale Schnittstelle geleitet wird. Es findet eine Konvertierung zwischen unterschiedlichen Video-Formaten statt, wobei die Übertragung der Videodaten via die unidirektionale Schnittstelle jeweils in (kryptographisch) unverschlüsselter Form erfolgt, da vor oder nach der unidirektionalen Schnittstelle eine inhaltliche Untersuchung der Daten (Firewall) stattfindet. Zweck ist die Entfernung von Schadcode aus dem Datenstrom. Liegt der Videostream eingangsseitig in kryptographisch verschlüsselter Form vor, was als eine Möglichkeit in der EP2706723A2 beschrieben ist, so wird er vor der unidirektionalen Übertragung entschlüsselt und danach optional wieder verschlüsselt.

Kundur et al. beschreibt ein System bestehend aus einer Basis-Station und Netzwerk-Knoten, wobei die Knoten jeweils einen optischen Sender und einen Empfänger aufweisen und untereinander kommunizieren. Wegen der grossen Anzahl und der zufälligen Ausrichtung der Knoten können Informationen von einem Knoten nur an bestimmte benachbarte Knoten direkt gesendet und nur von bestimmten (ggf. anderen) benachbarten Knoten direkt empfangen werden. Je nach Ausrichtung benachbarter Knoten können sich also unidirektionale Datenübertragungswege ergeben, wobei die Kommunikation in die Gegenrichtung über eine Anzahl weiter Knoten ("Loop") erfolgen muss. Kundur et al. beschreibt lediglich die Verschlüsselung von Routing-Informationen, d.h. solcher Informationen, die nicht später nach der Entschlüsselung durch das Zielgerät an den Benutzer ausgegeben werden.

Weiter ist aus der US 2012/0061458 A1 ein System bekannt, das es erlaubt, ein mobiles Gerät mit einem stationären Gerät zu verbinden. Zur Herstellung der Verbindung wird durch das mobile Gerät ein auf dem stationären Gerät angezeigter Barcode gescannt. Nach dem Aufbau der Verbindung kann ein Datenaustausch zwischen dem mobilen und dem stationären Gerät über eine herkömmliche, bidirektionale Netzwerkschnittstelle stattfinden.

### Aufgabe der Erfindung

Es ist eine Aufgabe der vorliegenden Erfindung, ein alternatives Verfahren zur sicheren Übermittlung von Daten von einem Quellgerät an ein Zielgerät (und/oder umgekehrt) bereitzustellen. Das Verfahren soll sicher und gleichzeitig möglichst benutzerfreundlich sein. Weitere Vorteile der vorliegenden Erfindung ergeben sich aus der nachfolgenden Beschreibung.

### Darstellung der Erfindung

Die oben genannte Aufgabe wird gelöst durch ein Verfahren nach Anspruch 1.

Offenbart ist unter anderem ein Verfahren zur Übermittlung von Daten von einem Quellgerät an ein Zielgerät, beinhaltend die Schritte: Verschlüsseln der Daten; Übermitteln der verschlüsselten Daten vom Quellgerät an das Zielgerät vorzugsweise über öffentliche, fremde und/oder ungesicherte Systeme und Netzwerke und via eine unidirektionale Schnittstelle; Entschlüsseln der übermittelten Daten und Ausgabe der entschlüsselten Daten über das Zielgerät.

Zudem sei ein System zur Durchführung des in diesem Dokument beschriebenen Verfahrens offenbart, sowie ein Quellgerät, ein optionales (weiter unten beschriebenes) Zwischengerät und ein Zielgerät. Das Quellgerät, das Zwischengerät und das Zielgerät seien als Komponenten des Systems und unabhängig davon offenbart. Das System und/oder das Quellgerät und/oder das Zwischengerät und/oder das Zielgerät sind zweckmässigerweise zur Durchführung des in diesem Dokument beschriebenen Verfahrens (oder von Teilen davon) ausgebildet und/oder programmiert.

Nachfolgend werden Merkmale beschrieben, wobei diese (individuell) als bevorzugte Merkmale zu betrachten sind, auch wenn sie nicht explizit als solche bezeichnet werden. Die Merkmale seien separat (als Teil eines beliebigen Verfahrens, Systems, Quellgeräts oder Zielgeräts) und - soweit sie sich nicht ausschliessen - in beliebiger Kombination offenbart. Dies schliesst die Möglichkeit der gleichzeitigen Verwirklichung aller beschriebenen Merkmale ein.

Das Verfahren und das System dienen zur sicheren Übermittlung von Daten von einem Quellgerät an ein Zielgerät und optional auch umgekehrt. Darüber hinaus besteht die Möglichkeit, die Daten vom Zielgerät an ein zweites Zielgerät zu übermitteln.

Die Daten können (insbesondere vor der Verschlüsselung) in elektronischer Form, vorzugsweise in der Form von Dateien, vorliegen. Bei den Daten kann es sich um Dokumente handeln, beispielsweise um Dokumente enthaltend Schriftzeichen und/oder Bilder, wie Textdokumente oder Zeichnungen.

Gemäss einem Szenario kann der Raum, in dem die Übermittlung der Daten stattfindet, in zwei Bereiche aufgeteilt werden. Dies ist einerseits eine "sichere Umgebung", bei der davon ausgegangen wird, dass sie nicht kompromittiert ist, und eine "unsichere Umgebung", bei der davon ausgegangen wird, dass sie kompromittiert ist oder sein könnte. Diese Aufteilung ist nicht zwingend, denn natürlich könnten die Daten mittels des offenbarten Verfahrens auch zum Beispiel nur innerhalb der sicheren Umgebung übermittelt werden. Die Vorteile des Verfahrens kommen jedoch besonders dann zum Tragen, wenn die Daten in eine unsichere Umgebung oder aus einer unsicheren Umgebung oder zumindest teilweise über eine unsichere Umgebung übermittelt werden. Als Beispiel dient hierbei die Übermittlung von Daten aus einem Firmennetzwerk oder einem Behördennetzwerk, also aus einer sicheren Umgebung, an eine Aussenstelle oder an ein Feldgerät eines Mitarbeiters im Aussendienst, also in eine unsichere Umgebung. Erwähnenswert sind die vier Varianten der Übermittlung "sicher nach unsicher nach sicher", "sicher nach unsicher", "unsicher nach sicher" und "unsicher nach unsicher", wobei "sicher" und "unsicher" jeweils die Art der Umgebung bezeichnen.

Sowohl die sichere als auch die unsichere Umgebung können eine oder mehrere Komponenten umfassen, wobei diejenigen Komponenten, die für das vorgeschlagene Verfahren benutzt werden, vorteilhaft als Komponenten des Systems angesehen werden.

Die sichere Umgebung umfasst üblicherweise das Quellgerät. Weiter kann die sichere Umgebung ein Netzwerk umfassen (im Folgenden lediglich zur besseren Unterscheidbarkeit von anderen Netzwerken als "internes Netzwerk" bezeichnet). Beim internen Netzwerk kann es sich beispielsweise um ein Firmennetzwerk oder ein Behördennetzwerk handeln.

Die unsichere Umgebung kann nach einer Variante ein Netzwerk (im Folgenden lediglich zur besseren Unterscheidung von anderen Netzwerken als "öffentliches Netzwerk" bezeichnet) und/oder ein Zwischengerät umfassen. Beim öffentlichen Netzwerk kann es sich beispielsweise um das Internet handeln.

Beim Quellgerät kann es sich um einen Computer, insbesondere einen Desktop-Computer oder einen Server, handeln. Zum Beispiel kann das Quellgerät ein Firmencomputer oder ein Behördencomputer sein. Das Quellgerät kann mit dem internen Netzwerk und/oder dem öffentlichen Netzwerk zur Übermittlung der Daten verbunden sein.

Das Zielgerät ist vorzugsweise ein Computer, insbesondere ein tragbarer Computer (zum Beispiel ein Notebook), und besonders bevorzugt ein Handgerät (zum Beispiel ein Tablet-Computer oder ein Smartphone). Das Zielgerät kann ein Display zur Anzeige der Daten und/oder eine Kamera und/oder einen Lautsprecher und/oder ein Mikrofon aufweisen. Alternativ oder zusätzlich kann das Zielgerät ein Drucker sein oder einen solchen aufweisen. Die beschriebene Ausgabe der Daten durch das Zielgerät kann über das Display (und/oder in der Form einer Anzeige auf dem Display) oder über den Drucker (und/ oder als Druckerzeugnis, zum Beispiel als Darstellung auf Papier) erfolgen.

Es ist natürlich sinnvoll, wenn die Ausgabe der Daten durch das Zielgerät in einer durch den menschlichen Benutzer des Zielgeräts (z.B. visuell oder akustisch) wahrnehmbaren Form erfolgt und/oder wenn die Ausgabe der Daten so erfolgt, dass die in den Daten enthaltenen Informationen von einem menschlichen Benutzer des Zielgeräts verstanden werden können (z.B. als Text und/oder Bild und/oder Sprache).

Sinnvollerweise ist das Zielgerät nicht zur Übermittlung der Daten mit einem Netzwerk, insbesondere nicht mit dem öffentlichen Netzwerk, verbunden und/oder verbindbar.

Alternativ oder zusätzlich kann vorgesehen sein, dass das Zielgerät keine oder keine funktionsfähige und/oder keine mit Energie versorgte und/oder keine zur Übermittlung der Daten ausgebildete oder programmierte Hardware zur bidirektionalen elektronischen Kommunikation aufweist.

Nach einer Ausgestaltungsvariante kann vorgesehen sein, dass das Zielgerät eine oder mehrere der folgenden Arten von Komponenten nicht aufweist: (a) Hardware zur Herstellung einer Direktverbindung ("point-to-point connection"); und/oder (b) Kabelverbindungen zu anderen Geräten (oder Steckverbinder oder Steckerteile zur Herstellung solcher Kabelverbindungen wie zum Beispiel USB-Buchsen), die zur Übermittlung der Daten ausgebildet oder konfiguriert sind; und/oder (c) elektronische Schaltungen zur Verbindung mit anderen Geräten und/oder mit einem Netzwerk zum Austausch von Daten (insbesondere Netzwerk-Hardware wie zum Beispiel Netzwerkkarten, die nach einer Variante zur Durchführung eines Verfahrens zur elektronischen Datenübermittlung, wie zum Beispiel LAN, WAN, Bluetooth oder Mobilfunk ausgebildet sein können).

Handelt es sich beim Zielgerät um ein handelsübliches Gerät, wie zum Beispiel einen Tablet-Computer, so kann es zweckmässig sein, vorhandene Hardware der vorgängig beschriebenen Art zu entfernen oder unbrauchbar zu machen, indem diese zum Beispiel von der Energieversorgung des Zielgeräts getrennt und damit nicht mehr mit Energie versorgt werden. Alternativ kann ein Zielgerät auch ohne solche Hardware, insbesondere ohne Netzwerkkomponenten, ausgebildet sein. Zum Beispiel kann das Zielgerät ein Raspberry Pi oder ein eigens konstruierter Computer sein. Durch diese Massnahme wird die Kommunikation des Geräts mit der Aussenwelt erschwert. Die einzigen Kommunikationskanäle, die dem Zielgerät bleiben, sind vorzugsweise die Ein- und Ausgabe von Video- und Audiosignalen, beispielsweise über Bildschirm, Kamera, Mikrofon und Lautsprecher.

Beim optionalen Zwischengerät kann es sich um einen Computer handeln, welcher vorzugsweise ein Display zur Anzeige der Daten und/oder eine Kamera und/oder einen Lautsprecher und/oder ein Mikrofon und/oder einen Drucker aufweist. Das Zwischengerät kann mit dem internen Netzwerk und/oder dem öffentlichen Netzwerk zur Übermittlung der Daten verbunden sein.

Die Übermittlung der Daten vom Quellgerät an das Zielgerät kann direkt oder über das interne Netzwerk und/oder das öffentliche Netzwerk und/oder das Zwischengerät erfolgen, wobei die zur Übermittlung verwendeten Komponenten vorzugsweise Teile des Systems sind. Unabhängig vom Weg, den die Daten vom Quellgerät zum Zielgerät nehmen, erfolgt die Übermittlung der verschlüsselten Daten an das Zielgerät über eine unidirektionale Schnittstelle.

Die Schnittstelle kann einen Sender und einen Empfänger aufweisen, wobei der Empfänger (beispielsweise ein Mikrofon oder eine Kamera oder ein Barcode-Scanner) vorzugsweise zur Aufnahme von Ton oder von Bildern ausgebildet ist. Bevorzugt enthält das Zielgerät die Schnittstelle oder einen Teil der Schnittstelle, insbesondere den Empfänger. Es ist ferner von Vorteil, wenn das Quellgerät oder das Zwischengerät ebenfalls einen Teil der Schnittstelle, insbesondere den Sender, enthält.

Durch die Verwendung einer unidirektionalen Schnittstelle kann verhindert werden, dass das Zielgerät über die Schnittstelle oder den Teil der Schnittstelle, den es enthält, die Daten an seine Umgebung, insbesondere an das öffentliche Netzwerk oder das Zwischengerät, übermittelt. Dadurch wird auch verhindert, dass nach aussen übermittelte Daten von zu diesem Zweck ausgebildeten Geräten, wie Sniffern, abgefangen werden können.

Gemäss einer besonders bevorzugten Variante handelt es sich bei der Schnittstelle um eine Audio-Schnittstelle, und/oder beim Empfänger handelt es sich um ein Mikrofon. Alternativ handelt es sich bei der Schnittstelle um eine Video-Schnittstelle, und/oder beim Empfänger handelt es sich um eine Kamera oder einen Barcode-Scanner.

Bevorzugt werden die verschlüsselten Daten in der Form eines (vorzugsweise drahtlos und/oder berührungslos übertragbaren) Signals via die Schnittstelle an das Zielgerät übermittelt, und/oder die Schnittstelle (oder der Empfänger) ist zum berührungslosen Empfang der verschlüsselten Daten und/oder des Signals ausgebildet.

Alternativ oder zusätzlich können die verschlüsselten Daten in der Form von Wellen, insbesondere frequenzmodulierten Wellen und/oder amplitudenmodulierten Wellen, via die Schnittstelle an das Zielgerät übermittelt werden, wobei es sich bei den Wellen vorzugsweise um Schallwellen oder elektromagnetische Wellen, insbesondere Licht, handelt.

Nach einer Variante können die verschlüsselten Daten in der Form eines Audio-Signals und/oder eines Video-Signals und/oder als Bild oder als eine Sequenz von Bildern (zum Beispiel ein Video) und/oder als Ton oder als eine Sequenz von Tönen via die Schnittstelle an das Zielgerät übermittelt werden.

Alternativ oder zusätzlich können die verschlüsselten Daten in der Form eines Analogsignals via die Schnittstelle an das Zielgerät übermittelt werden.

Nach einer Variante können die verschlüsselten Daten in einer durch menschliche Sinne, insbesondere durch Hören oder Sehen, berührungslos wahrnehmbaren Form via die Schnittstelle an das Zielgerät übermittelt werden. Auf diese Weise kann der Benutzer feststellen, ob gerade eine Übermittlung stattfindet, wodurch die Sicherheit erhöht wird.

Die Übermittlung der Daten via die Schnittstelle an das Zielgerät umfasst vorzugsweise das Senden der Daten durch den Sender und das Empfangen derselben durch den Empfänger der Schnittstelle. Demnach sei bei Erwähnung der Übermittlung der Daten via die Schnittstelle an das Zielgerät in einer bestimmten Form (vgl. oben) alternativ oder zusätzlich auch das Senden der Daten durch den Sender und/oder das Empfangen der Daten durch den Empfänger in der beschriebenen Form offenbart. Weiter sei das zur Übermittlung der Daten an das Zielgerät via die Schnittstelle Offenbarte alternativ oder zusätzlich auch für die Übermittlung zusätzlicher Daten in die Gegenrichtung, also vom Zielgerät (vgl. weiter unten), offenbart, und die im Zusammenhang mit der Schnittstelle offenbarten Merkmale seien auch für die optionale zweite Schnittstelle (vgl. weiter unten) offenbart.

Es ist nach einer bevorzugten Ausgestaltung vorgesehen, dass die verschlüsselten Daten über ein Netzwerk vom Quellgerät an das Zwischengerät übermittelt werden, und dass die verschlüsselten Daten vom Zwischengerät über die Schnittstelle an das Zielgerät übermittelt werden.

Bei Erwähnung eines Netzwerks seien jeweils auch die folgenden bevorzugten Arten von Netzwerken offenbart: Netzwerk zum Austausch von Daten, Kommunikationsnetzwerk, Computernetzwerk und/oder Internet.

Vor dem Übermitteln der verschlüsselten Daten an das Zielgerät via die Schnittstelle können die verschlüsselten Daten in ein (vorzugsweise maschinenlesbares) Format umgewandelt werden, bei dem es sich mit Vorteil um ein 2D-Barcode-Format, insbesondere ein Matrix-Code-Format und besonders bevorzugt ein QR-Code-Format, handelt. Die verschlüsselten Daten können dann (beispielsweise in der Form eines oder einer Sequenz mehrerer 2D-Barcodes) auf einer Anzeige, insbesondere einer Anzeige des Zwischengeräts, angezeigt werden, wobei das Zielgeräts dann zweckmässigerweise, wie oben beschrieben, eine Kamera oder einen Barcode-Scanner aufweist und mittels der Kamera oder dem Barcode-Scanner die angezeigten Daten empfangen oder aufgenommen werden.

Es besteht auch die Möglichkeit, das Zielgerät und das Zwischengerät in ein gemeinsames Gehäuse zu integrieren. In diesem Gehäuse sind dann zweckmässigerweise auch die Schnittstelle und/oder der Empfänger und der Sender angeordnet. Dadurch wird eine noch einfachere Handhabung ermöglicht. Das Zwischengerät kann bei dieser Variante zum Beispiel ein üblicher Computer, also beispielsweise ein PC, sein, der mit dem internen Netzwerk verbunden ist. Durch die Anordnung des Zielgeräts im selben Gehäuse wie das Zwischengerät und die Verbindung des letzteren mit dem internen Netzwerk ist einerseits die Bedienung erleichtert und anderseits die Sicherheit erhöht. Stattdessen könnte das Zwischengerät aber natürlich auch mit dem öffentlichen Netzwerk, also mit der unsicheren Umgebung, verbunden sein.

Beim Verfahren ist vorgesehen, dass die zu übermittelnden Daten verschlüsselt werden. Dazu wird ein kryptographisches Verfahren verwendet.

Die Verschlüsselung kann zum Beispiel durch das Quellgerät und/oder auf dem Quellgerät und/oder in der sicheren Umgebung und/oder innerhalb des internen Netzwerks durchgeführt werden. Beim kryptographischen Verfahren kann es sich zum Beispiel um ein symmetrisches, vorzugsweise jedoch um ein asymmetrisches Verfahren (insbesondere ein Public-Key-Verfahren) handeln. Bevorzugt werden die Daten nur in verschlüsselter Form an das Zielgerät übermittelt und erst auf dem Zielgerät und/oder (ganz oder teilweise) durch das Zielgerät entschlüsselt. Es ist zudem sinnvoll, wenn die verschlüsselten Daten in einem nicht-flüchtigen Speicher des Zielgeräts gespeichert werden.

Die Entschlüsselung der verschlüsselten Daten kann auf dem Zielgerät und/oder (ganz oder teilweise) durch das Zielgerät durchgeführt werden.

Nach einer Variante wird zur Entschlüsselung der verschlüsselten Daten ein auf einem Chip gespeicherter kryptographischer Schlüssel benutzt, wobei der Chip vorzugsweise einen Teil der Entschlüsselung durchführt. Der Chip kann Teil einer Chipkarte, insbesondere einer Prozessorchipkarte, sein.

Nach einer Variante kann die Verwendung des Schlüssels einen Schritt der Entschlüsselung darstellen, wobei dieser Schritt vorzugsweise vom Chip durchgeführt wird und/oder kein direkter Zugriff und/oder kein Kopieren des Schlüssels durch das Zielgerät möglich oder nötig ist.

Der Chip kann einen Prozessor aufweisen, welcher mit Vorteil dazu ausgebildet und/oder programmiert ist, das Kopieren des kryptographischen Schlüssels vom Chip zu verhindern. Alternativ oder zusätzlich kann vorgesehen sein, dass der Chip einen Speicher und einen Prozessor aufweist, wobei der Schlüssel im Speicher gespeichert ist, wobei der Speicher vorzugsweise nur über den Prozessor auslesbar ist und/oder der Schlüssel über den Prozessor nur in einer anderen als in der im Speicher gespeicherten Form auslesbar ist.

Beim Chip handelt es sich vorzugsweise um einen Chip einer Smartcard und/oder einer Prozessorchipkarte. Es kann also der Einsatz einer Smartcard und/oder einer Prozessorchipkarte beim Verfahren vorgesehen sein.

Die Prozessorchipkarte kann einen Mikroprozessor aufweisen, der dazu programmiert ist, Daten im Speicher der Prozessorchipkarte über kryptographische Verfahren vor fremdem Zugriff zu schützen.

Weiter kann vorgesehen sein, dass der Chip durch das Zielgerät mit Energie versorgt und/oder verwendet und/oder ausgelesen und/oder angesteuert wird.

Der Chip kann zum Zwecke der Entschlüsselung vor der Entschlüsselung mit dem Zielgerät verbunden und/oder nach der Ausgabe der Daten über das Zielgerät vom Zielgerät entfernt werden.

Der Schlüssel auf dem Chip kann vor seiner Benutzung durch einen Authentisierungsschritt und/oder einen Authentifizierungsschritt benutzbar gemacht werden.

Der Schlüssel auf dem Chip kann durch Eingabe und/oder durch Scannen eines oder mehrerer Identifikationsmerkmale, beispielsweise eines Passworts und/oder eines Einmal-Codes (zum Beispiel RSA oder Secure ID) und/oder eines biometrischen Merkmals (zum Beispiel eines Fingerabdrucks oder eines Abbilds der Iris, eines Tattoos, der Hand- oder Gesichtsgeometrie, der Handvenenstruktur, der Retina etc. des Benutzers), oder einer Kombination mehrerer solcher Merkmale, benutzbar gemacht werden.

Das Zielgerät kann optional dazu ausgebildet und/oder programmiert sein, eine Aufforderung zur Eingabe und/oder zum Scannen des einen oder der mehreren Identifikationsmerkmale an den Benutzer zu stellen.

Die Daten in entschlüsselter Form werden im Zielgerät vorzugsweise ausschliesslich in einem flüchtigen Speicher und/oder nicht in einem nicht-flüchtigen Speicher gespeichert.

Die Ausgabe der entschlüsselten Daten über das Zielgerät kann erfolgen, während die entschlüsselten Daten im flüchtigen Speicher gespeichert vorliegen.

Die entschlüsselten Daten liegen vorzugsweise lediglich im flüchtigen Speicher des Zielgeräts vor und sind nur so lange über das Zielgerät ausgebbar, insbesondere auf dem Display sichtbar, wie der Benutzer anhand des auf der Prozessorchipkarte gespeicherten privaten Schlüssels durch vorgängige Eingabe des Identifikationsmerkmals autorisiert und/oder authentisiert ist. Ein Verlust und/oder Diebstahl des Zielgerätes, der Prozessorchipkarte oder sonstiger Komponenten beeinträchtigt die Vertraulichkeit der Daten nicht.

Als weitere Sicherheitsmassnahme kann vorgesehen sein, dass die verschlüsselten Daten und/oder die entschlüsselten Daten auf dem Zielgerät nach einer vorbestimmten Zeit gelöscht werden. Das Zielgerät kann dazu ausgebildet und/oder programmiert sein, diesen Schritt durchzuführen.

Bei der vorbestimmten Zeit kann es sich beispielsweise um eine Zeitspanne handeln, beginnend mit der Durchführung eines beliebigen Schritts des Verfahrens, oder beginnend mit einem festen Datum. Beim Verfahrensschritt kann es sich zum Beispiel um die Eingabe oder das Scannen des einen oder der mehreren Identifikationsmerkmale, die Entschlüsselung, die Speicherung der verschlüsselten oder der entschlüsselten Daten, die letzte Benutzung des Zielgeräts handeln.

Die Ausgabe der Daten erfolgt über das Zielgerät und/oder an einen menschlichen Benutzer des Zielgeräts. Beispielsweise kann das Zielgerät ein Display aufweisen, und die Ausgabe der entschlüsselten Daten kann als Darstellung auf dem Display erfolgen, und/oder das Zielgerät kann einen Lautsprecher aufweisen, und die Ausgabe der entschlüsselten Daten kann als Ton oder als Tonfolge, zum Beispiel in der Form von Sprache, erfolgen, und/oder das Zielgerät kann einen Drucker aufweisen und die Ausgabe der entschlüsselten Daten kann als Darstellung auf einem Druckerzeugnis erfolgen.

Es ist von Vorteil, wenn die Ausgabe der entschlüsselten Daten in einer durch unberechtigte Personen nicht zugänglichen und/oder nicht einsehbaren Umgebung (zum Beispiel in einem verschlossenen Raum eines Gebäudes) erfolgt. Die Umgebung kann zu diesem Zweck von einer Barriere (innerhalb derer das Zielgerät und der Benutzer Platz finden, beispielsweise einer Wand) umgeben sein, die dazu ausgebildet ist, ein Passieren der entschlüsselten Daten in der Form, wie sie vom Zielgerät ausgegeben werden, zu verhindern.

Ein Vorteil des Verfahrens liegt darin, dass prinzipiell sämtliche Komponenten des Systems (einschliesslich Hardware und Software) offengelegt werden können, d.h. nicht geheim gehalten werden müssen.

Nach einer Variante können die verschlüsselten Daten vom Quellgerät an den Sender der unidirektionalen Schnittstelle über öffentliche und/oder fremde und/oder ungesicherte Systeme übermittelt werden, wobei es sich bei diesen Systemen z.B. um ein oder mehrere Netzwerke handeln kann.

Das Verfahren kann zum Beispiel folgendermassen ablaufen: Die Video- und/oder Audioschnittstellen des Zwischengeräts und des Zielgeräts werden dafür genutzt, verschlüsselte Daten auf das Zielgerät zu laden. Dazu werden die zu übermittelnden Daten zuvor auf dem Quellgerät oder im internen Netz in ein maschinenlesbares Format umgewandelt. Im Falle von Video kann dies eine Sequenz von QR-Codes sein, im Falle von Audio ein modulierter Audio Stream, wie er von Modems genutzt wird. Diese Daten werden auf dem Zielgerät via Mikrofon oder Kamera empfangen und gespeichert. Sämtliche Daten, und damit auch neu übermittelte, liegen bis zur Entschlüsselung ausschliesslich in verschlüsselter Form auf dem Zielgerät vor. Weiter können die Daten auf dem Zielgerät mit einem Ablaufdatum versehen werden, wobei sie bei Erreichen des Ablaufdatums oder bei Nichtbenutzung des Zielgeräts während eines bestimmten Zeitraums gelöscht werden. Nach der Entschlüsselung können die Daten durch das Zielgerät ausgegeben, d.h. in unverschlüsselter Form sichtbar oder hörbar gemacht werden, wobei sie in entschlüsselter Form lediglich im flüchtigen Speicher (zum Beispiel im RAM, d.h. "random access memory") des Zielgeräts gespeichert werden. Eine Zwischenspeicherung auf nicht-flüchtigen Speichern (Flashcard, Disk etc.) sollte ausgeschlossen werden. Für die Verschlüsselung und Entschlüsselung der Daten wird ein Schlüsselpaar aus einem öffentlichen Schlüssel (public key) und einem privaten Schlüssel (private key) verwendet. Jeder Benutzer des Zielgeräts erhält eine Smartcard, auf der mindestens sein privater Schlüssel gespeichert ist. Die Smartcard selbst wiederum ist mittels eines oder mehrerer Identifikationsmerkmale (Passwort, Fingerabdruck, Iris-Scan, vgl. oben) und gegebenenfalls weiterer Merkmale geschützt. Ruft der Benutzer ein geheimes Dokument auf dem Zielgerät auf, so wird er vom Zielgerät zum Einlegen seiner Smartcard in das Zielgerät sowie zur Eingabe des Identifikationsmerkmals bzw. der Identifikationsmerkmale in das Zielgerät aufgefordert. Dies stellt die bevorzugte Art der Authentisierung (durch den Benutzer) respektive Authentifizierung (durch das Zielgerät) dar. Nach erfolgreicher Authentisierung respektive Authentifizierung werden die Daten in entschlüsselter Form auf dem Display des Zielgeräts angezeigt oder ausgedruckt oder in der Form von Sprache ausgegeben. Gemäss einer Variante bleiben die Daten für einen vorbestimmten Zeitraum in entschlüsselter Form auf dem Display des Zielgeräts sichtbar und / oder für die Audioausgabe bereit. Nach Ablauf dieser Zeit kann vom Zielgerät eine erneute Authentisierung bzw. eine erneute Authentifizierung verlangt werden. Erfolgt diese nicht, wird das entschlüsselte Dokument wieder aus dem Speicher entfernt. Das Zielgerät ist sicher gegen alle herkömmlichen Angriffsvektoren, die auf Netzwerken, Bluetooth oder Mobilkommunikation aufbauen, da die entsprechenden Kommunikationskomponenten im Zielgerät nicht vorhanden bzw. nicht funktionsfähig sind. Ein möglicher Angriffsvektor besteht im herkömmlichen Ausspionieren. Ein Angreifer blickt dem Benutzer unbemerkt über die Schulter. Daher ist es vorteilhaft, wenn der Benutzer die Smartcard erst in einer sicheren (zum Beispiel in einer für Unbefugte nicht zugänglichen und/oder nicht einsehbaren) Umgebung einlegt und die Daten erst in dieser Umgebung sichtet. Ein weiterer Angriffsvektor ist Diebstahl. Allerdings müsste der Dieb in Besitz des Zielgeräts (mit den verschlüsselten Daten), der Smartcard des Benutzers sowie dessen Passworts, Fingerabdrucks etc. gelangen, was nahezu ausgeschlossen werden kann.

Sicherheit und Benutzerfreundlichkeit schliessen sich gegenseitig oftmals aus. Dennoch erlaubt das beschriebene System eine sehr einfache Bedienung und schliesst Benutzerfehler, die die Vertraulichkeit verletzen würden, nahezu aus. Beim Übermitteln der Daten auf das Zielgerät muss der Benutzer den "Air Gap" aktiv überwinden, indem er die verschlüsselten Daten zum Beispiel im Video- oder Audio-Format auf das Zwischengerät lädt und diese Video- bzw. Audiosequenz mit dem Zielgerät aufzeichnet. Die Sichtung von Daten, die bereits auf dem Zielgerät vorhanden sind, ist für den Benutzer keine weitere Herausforderung. Da ausschliesslich mit Standardkomponenten gearbeitet werden kann und offen verfügbare Software eingesetzt werden kann, halten sich die Herstellungskosten im Rahmen. Es ist keine spezielle Hardware notwendig, und eine Migration auf neue Hardware ist jederzeit möglich.

Begriffe in der vorliegenden Patentanmeldung sollen bevorzugt so verstanden werden, wie sie ein Fachmann auf dem Gebiet verstehen würde. Sind im jeweiligen Kontext mehrere Interpretationen möglich, so sei vorzugsweise jede Interpretation individuell offenbart. Insbesondere für den Fall, dass Unklarheiten bestehen sollten, können alternativ oder ergänzend die in diesem Dokument aufgeführten bevorzugten Definitionen herangezogen werden.

Bei Verwendung des Begriffs "Übermittlung" (oder "übermitteln") sei neben dessen üblicher Bedeutung alternativ oder zusätzlich die Übermittlung via die Schnittstelle und/oder die Übermittlung vom Sender an den Empfänger des Zielgeräts und/oder die gesamte Übermittlung vom Quellgerät zum Zielgerät offenbart.

"Unidirektional" bedeutet vorzugsweise, dass durch die Schnittstelle nur Daten in eine Richtung, insbesondere vom Sender zum Empfänger und/oder vom Quellgerät oder Zwischengerät an das Zielgerät, übermittelt werden können. Die Schnittstelle und/oder der Sender und/oder der Empfänger und/oder das Zielgerät können zu einer solchen Übermittlung ausgebildet und/oder programmiert sein.

"Bidirektional" bezeichnet im Gegensatz dazu vorzugsweise, die Ausbildung, Eignung und/oder Programmierung zur Übermittlung der Daten in eine Richtung und (gleichzeitig und/oder zeitversetzt) auch in die Gegenrichtung.

Wenn in diesem Dokument von "Netzwerken" die Rede ist, so handelt es sich vorzugsweise um Netzwerke zur Datenübermittlung und/oder Computernetzwerke. Die Netzwerke können zur Übermittlung von Daten über Kabel und/oder kabellos ausgebildet sein.

Aktionen, die in der Form von Eignungen, Fähigkeiten, Eigenschaften oder Funktionen des in diesem Dokument beschriebenen Systems (oder dessen Komponenten) offenbart sind, seien auch (unabhängig und in beliebiger Kombination) als Verfahrensschritte des Verfahrens offenbart und zwar abhängig und unabhängig vom System oder von entsprechenden Komponenten des Systems.

Es sei zudem die Verwendung von Merkmalen des beschriebenen Systems oder der beschriebenen Komponenten des Systems (unabhängig und in beliebiger Kombination) als Verfahrensschritte des Verfahrens offenbart.

Umgekehrt können das offenbarte System und/oder Komponenten des Systems Mittel aufweisen, die einen oder mehrere der im Zusammenhang mit dem offenbarten Verfahren genannten Verfahrensschritte durchführen können und/oder dazu ausgebildet sind.

### Kurze Beschreibung der Zeichnungen

Es zeigt in schematischer Darstellung:

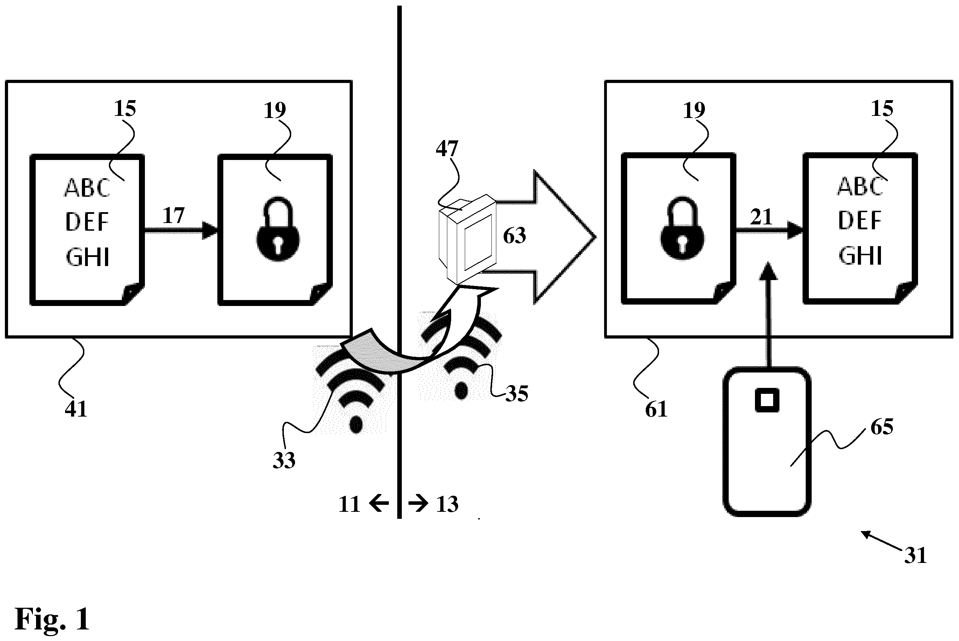

Fig. 1 eine Skizze eines zur Durchführung des Verfahrens verwendbaren Systems.

### Ausführung der Erfindung

Die Erfindung wird nachfolgend beispielhaft anhand der Fig. 1 erläutert, welche den Ablauf einer Verfahrensvariante und die Komponenten des zu deren Durchführung verwendeten Systems 31 skizzenhaft zeigt.

Das Verfahren erlaubt es, vertrauliche oder geheime elektronische Daten 15,19, insbesondere Dokumente, von einem Quellgerät 41 (optional über öffentliche und/oder nicht gesicherte Netzwerke 35) an ein Zielgerät 61 zu übermitteln.

Bei der Anwendungsvariante befindet sich das Quellgerät 41 in einer sicheren Umgebung 11, das Zielgerät 61 hingegen in einer unsicheren Umgebung 13. Eine sichere Umgebung 11 kann ein internes Netzwerk 33, beispielsweise ein Firmennetzwerk oder ein Behördennetzwerk, umfassen. Zu einer unsicheren Umgebung 13 können ungesicherte, fremde und/oder öffentliche Systeme, insbesondere ein öffentliches Netzwerk 35 wie das Internet, gehören. Somit werden die Daten 15,19 zumindest streckenweise via die unsichere Umgebung 13 übermittelt, was den Schutz der Daten 15,19 vor unerlaubten oder unerwünschten Zugriffen (beispielsweise durch das Anfertigen von Screenshots, den Einsatz von Keyloggern oder sonstiger Schadprogramme) notwendig macht.

Es ist vorgesehen, dass die Daten 15 in der sicheren Umgebung 11 mittels eines kryptographischen Verfahrens 17 verschlüsselt werden. Die Verschlüsselung 17 kann durch das Quellgerät 41 durchgeführt werden, wobei es sich beim kryptographischen Verfahren vorzugsweise um ein asymmetrisches Verfahren handelt, bei dem die Daten 15 mittels eines öffentlichen Schlüssels des Empfängers verschlüsselt werden. Die verschlüsselten und maschinenlesbaren Daten 19 werden anschliessend via die sichere Umgebung 11, also unter anderem das gezeigte interne Netzwerk 33, und via die unsichere Umgebung 13, im vorliegenden Fall über das öffentliche Netzwerk 35, an ein Zwischengerät 47 übermittelt, welches sich bei dieser Variante in der unsicheren Umgebung 13 befindet.

Vom Zwischengerät 47 werden die verschlüsselten Daten 19 über eine unidirektionale Schnittstelle 63 an das Zielgerät 61 übermittelt. Die Schnittstelle 63 umfasst einen Empfänger, der Teil des Zielgeräts 61 ist, wobei es sich beim Empfänger um ein Mikrofon oder eine Kamera des Zielgeräts 61 handeln kann. Die verschlüsselten Daten 19 können in diesem Fall zum Beispiel in Form eines modulierten Audiostreams oder als Videostream übertragen werden. Die Schnittstelle 63 umfasst einen zum Empfänger korrespondierenden Sender, der Teil des Zwischengeräts 47 ist. Beim Sender kann es sich um einen Lautsprecher oder einen Bildschirm handeln.

Beispielsweise können die verschlüsselten Daten 19 in der Form einer Sequenz von QR-Codes auf dem Bildschirm des Zwischengeräts 47 angezeigt und währenddessen von der Kamera des Zielgeräts 61 aufgenommen werden. Die verschlüsselten Daten 19 können bereits in der sicheren Umgebung 11 (insbesondere durch das Quellgerät 41) in das zur Übermittlung via die unidirektionale Schnittstelle 63 vorgesehene Format umgewandelt werden, also beispielsweise in eine Sequenz von QR-Codes oder eine Tonfolge.

Das Zielgerät 61 besitzt zweckmässigerweise keine bidirektionale Schnittstelle und/oder keinen Sender, der Teil einer bidirektionalen Schnittstelle ist. Insbesondere ist es sinnvoll, wenn das Zielgerät 61 keine funktionsfähige Netzwerk-Hardware (zum Beispiel für LAN (local area network), WAN (wide area network), WLAN (wireless LAN), Mobilfunk oder Bluetooth) aufweist. Dies kann zum Beispiel durch die Entfernung oder das Unbrauchbarmachen der Netzwerk-Hardware des Zielgeräts 61 erreicht werden. Durch die Verwendung einer unidirektionalen Schnittstelle 63 und die Absenz funktionsfähiger Netzwerk-Hardware beim Zielgerät 61 sowie die damit einhergehende Isolierung des Zielgeräts 61, die verhindert, dass das Zielgerät 61 mit der Aussenwelt kommuniziert, wird ein exzellenter Schutz gegen Viren und andere Schadprogramme sowie sonstige realistisch denkbare technische Angriffe erreicht.

Das Verfahren lässt sich also auch mit einem handelsüblichen Handgerät als Zielgerät durchführen, das als "nicht klassifiziert" gelten kann. Sinnvoll ist insbesondere die Verwendung von kleinen, leichten und damit mobilen Zielgeräten, die überall hin mitgenommen werden können. Es besteht auch die Möglichkeit, das System vollständig auf offenen, frei erhältlichen, nicht klassifizierten und bekannten Komponenten, Verfahren und Algorithmen aufzubauen. Die Tatsache, dass das Verfahren nicht an eine bestimmte Hardware oder Software gebunden ist, macht das System in der Anschaffung und im Betrieb besonders kostengünstig und erhält die Flexibilität, das System an aktuelle und zukünftige Bedürfnisse anzupassen.

Die auf die oben beschriebene Weise übermittelten verschlüsselten Daten 19 werden auf dem Zielgerät 61 mittels eines kryptographischen Verfahrens 21 entschlüsselt, wobei es sich beim kryptographischen Verfahren 21 vorzugsweise um ein asymmetrisches Verfahren handelt, bei dem die Daten 19 mittels eines (mit dem oben genannten öffentlichen Schlüssel korrespondierenden) privaten Schlüssels entschlüsselt werden.

Es hat sich als nützlich erwiesen, wenn der private Schlüssel auf einer Prozessorchipkarte 65 (Smartcard) gespeichert ist, die zur Entschlüsselung der Daten 19 mit dem Zielgerät 61 verbunden wird. Die Prozessorchipkarte 65 wird sicherheitshalber erst dann ins Zielgerät 61 eingelegt, wenn sich der Benutzer in einer Umgebung befindet, in der die Ausgabe der Daten 15 durch das Zielgerät 61 nicht durch Unbefugte beobachtet oder aufgezeichnet werden kann (keine Kameras, keine unberechtigten Personen in Sichtweite etc.).

Als weitere Sicherheitsmassnahme ist vorgesehen, dass die Prozessorchipkarte 65 und/oder das Zielgerät 61 dazu programmiert sind, die Verwendung der Prozessorchipkarte 65 und/oder die Entschlüsselung der verschlüsselten Daten 19 nur unter der Bedingung zuzulassen, dass vom Benutzer ein oder mehrere Identifikationsmerkmale in das Zielgerät 61 eingegeben werden, die mit dem einen oder den mehreren auf der Prozessorchipkarte 65 und/oder dem Zielgerät 61 gespeicherten Identifikationsmerkmalen übereinstimmen. Beim einen oder den mehreren Identifikationsmerkmalen kann es sich um ein Passwort und/oder ein biometrisches Merkmal (zum Beispiel einen Fingerabdruck oder ein Abbild der Iris) handeln. Ein Diebstahl von Komponenten des Systems, insbesondere des Zielgeräts, bleibt durch den Einsatz solcher Massnahmen ohne Auswirkungen auf die Geheimhaltung der darauf abgelegten Dokumente.

Die Daten 15 werden nach der Entschlüsselung, d.h. im entschlüsselten Zustand, ausschliesslich in einem flüchtigen Speicher des Zielgeräts 61, also zum Beispiel im RAM, gespeichert.

Ausserdem werden die entschlüsselten Daten 15 vom Zielgerät 61 ausgegeben, üblicherweise in der Form einer Anzeige auf einem Display und/oder als Sprachausgabe des Zielgeräts 61 und / oder in Form eines Druckerzeugnisses, wenn das Zielgerät 61 einen Drucker umfasst.

Geheime Dokumente werden also auf einem Zielgerät 61 für berechtigte Personen ("Benutzer") zur Verfügung gestellt, wobei das Verfahren das Hinzufügen neuer Dokumente erlaubt.

Es kann jedoch nützlich sein, wenn erstellte und/oder geänderte, geheime Dokumente, oder allgemein zusätzliche Daten, auch in Gegenrichtung, also vom Zielgerät 61, an das Quellgerät 41 (zum Beispiel vom Benutzer an die Firma) übermittelt werden können. Dazu wird der beschriebene Vorgang im Wesentlichen umgekehrt. Ein geheimes Dokument auf dem Zielgerät 61, welches zuvor zum Beispiel mittels der Kamera des Zielgeräts 61 fotografiert wurde, wird zuerst verschlüsselt, dann an das Quellgerät 41 übermittelt und in der sicheren Umgebung 11 wieder entschlüsselt. Die Daten können dabei optional via das beschriebene Zwischengerät 47 oder ein anderes Zwischengerät übermittelt werden. Wenn im Folgenden vom "Zwischengerät" die Rede ist, so sei das Zwischengerät 47 oder alternativ das genannte andere Zwischengerät (zum Beispiel ein Mobiltelefon des Benutzers) gemeint.

Die Verschlüsselung wird auf dem Zielgerät 61 durchgeführt, wobei es sich beim dazu verwendeten kryptographischen Verfahren vorzugsweise um ein asymmetrisches Verfahren handelt, bei dem die zusätzlichen Daten mittels eines öffentlichen Schlüssels des Empfängers (zu unterscheiden vom weiter oben genannten öffentlichen Schlüssel bzw. vom weiter oben genannten Empfänger) verschlüsselt werden. Die Daten können mit dem privaten Schlüssel des Benutzers (zu unterscheiden vom weiter oben genannten privaten Schlüssel) signiert werden. Es ist vorteilhaft, wenn der öffentliche Schlüssel des Empfängers ebenfalls auf der Prozessorchipkarte 65 gespeichert ist, die zur Verschlüsselung der zusätzlichen Daten mit dem Zielgerät 61 verbunden wird. Analog zum oben beschriebenen Vorgehen bei der Entschlüsselung 21 kann die Eingabe eines oder mehrerer Identifikationsmerkmale eine Voraussetzung für die Durchführung des kryptographischen Verfahrens und/oder für die Benutzung des öffentlichen Schlüssels des Empfängers darstellen.

Vom Zielgerät 61 werden die verschlüsselten zusätzlichen Daten über eine (zweite) unidirektionale Schnittstelle an das Zwischengerät übermittelt. Die (zweite) Schnittstelle umfasst einen Empfänger, der Teil des Zwischengeräts ist, wobei es sich beim Empfänger vorzugsweise um ein Mikrofon oder eine Kamera des Zwischengeräts handelt. Die verschlüsselten Daten 19 können in diesem Fall zum Beispiel in Form eines modulierten Audiostreams oder als Videostream übertragen werden.

Die (zweite) Schnittstelle umfasst einen zum Empfänger korrespondierenden Sender, der Teil des Zielgeräts 61 ist. Beim Sender kann es sich mit Vorteil um einen Lautsprecher oder einen Bildschirm handeln. Die verschlüsselten zusätzlichen Daten können in einer Form übertragen werden, wie sie oben im Zusammenhang mit der Übertragung in die Gegenrichtung bzw. über die Schnittstelle 63 beschrieben wurde. Beispielsweise können die verschlüsselten Daten 19 in der Form einer Sequenz von QR-Codes auf dem Bildschirm des Zielgeräts 61 angezeigt und währenddessen von der Kamera des Zwischengeräts aufgenommen werden, oder sie werden als Tonfolge vom Lautsprecher des Zielgeräts 61 ausgegeben und vom Mikrofon des Zwischengeräts aufgezeichnet.

Die verschlüsselten zusätzlichen Daten werden anschliessend vom Zwischengerät via die unsichere Umgebung 13, also wiederum zum Beispiel über das öffentliche Netzwerk 35, und via die sichere Umgebung 11, also im vorliegenden Fall das interne Netzwerk 33, an das Quellgerät 41 übermittelt. Wie bereits oben angedeutet, muss das Zwischengerät, das zur Übermittlung vom Quellgerät an das Zielgerät verwendet wird, nicht dasselbe sein, wie das Zwischengerät, welches zur Übermittlung in die Gegenrichtung, also vom Zielgerät an das Quellgerät, eingesetzt wird, obwohl dies natürlich eine Variante ist.

Es ist vorgesehen, dass die verschlüsselten zusätzlichen Daten in der sicheren Umgebung 11 mittels eines kryptographischen Verfahrens entschlüsselt werden. Die Entschlüsselung kann zweckmässigerweise durch das Quellgerät 41 durchgeführt werden, wobei es sich beim kryptographischen Verfahren vorzugsweise um ein asymmetrisches Verfahren handelt, bei dem die Daten 19 mittels des privaten Schlüssels des Empfängers (welcher mit dem oben genannten öffentlichen Schlüssel des Empfängers korrespondiert) entschlüsselt werden.

Die Entschlüsselung kann in der sicheren Umgebung 11 optional auch durch ein anderes Gerät als das Quellgerät 41 durchgeführt werden. Sobald die verschlüsselten zusätzlichen Daten in der sicheren Umgebung 11 angekommen sind, können diese auf jedem beliebigen Gerät entschlüsselt werden, solange der Empfänger den privaten Schlüssel für die Entschlüsselung besitzt, der zum öffentlichen Schlüssel passt, mit dem die Daten verschlüsselt wurden. Alternativ können die zusätzlichen Daten in der sicheren Umgebung 11 auch in der verschlüsselten Form gleich wieder an ein anderes Gerät übermittelt werden. Diese können dann dort entschlüsselt werden, solange der Benutzer den richtigen Schlüssel besitzt. Das hat den Vorteil, dass zwei Benutzer im Feld geheime Dokumente austauschen können, ohne dass diese geheimen Dokumente in der sicheren Umgebung 11 entschlüsselt werden müssen.

Zur Durchführung des oben beschriebenen Verfahrens muss das Zielgerät 61 weder in ein Netzwerk eingebunden werden, noch muss auf dem Zielgerät 61 ein externer Datenträger gelesen werden. Ausserdem muss auf dem Zwischengerät 47 keine spezielle Software installiert werden, und das Zwischengerät 47 muss auch nicht garantiert frei von Schadprogrammen sein.

### Bezugszeichenliste:

- 11: sichere Umgebung
- 13: unsichere Umgebung
- 15: Daten
- 17: Verschlüsselung
- 19: verschlüsselte Daten
- 21: Entschlüsselung
- 31: System
- 33: internes Netzwerk
- 35: öffentliches Netzwerk
- 41: Quellgerät
- 47: Zwischengerät
- 61: Zielgerät
- 63: unidirektionale Schnittstelle
- 65: Smartcard

## Patentansprüche

1. Verfahren zur Übermittlung von Daten von einem Quellgerät (41) an ein Zielgerät (61), beinhaltend die Schritte:
- Verschlüsseln (17) der Daten (15) auf dem Quellgerät (41) mittels eines kryptographischen Verfahrens,
- Übermitteln der verschlüsselten Daten (19) an das Zielgerät (61) über eine Schnittstelle, welche einen Sender und einen Empfänger aufweist, wobei der Empfänger Teil des Zielgeräts (61) ist und es sich bei der Schnittstelle um eine unidirektionale Schnittstelle handelt
- Entschlüsseln (21) der verschlüsselten Daten (19) auf dem Zielgerät (61), **dadurch gekennzeichnet, dass**
- die verschlüsselten Daten (19) in einem nicht-flüchtigen ersten Speicher des Zielgeräts (61) gespeichert werden, wobei die verschlüsselten Daten (19) im ersten Speicher vorzugsweise nach einer vorbestimmten Zeit durch das Zielgerät (61) gelöscht werden,
- die Daten (15) in entschlüsselter Form im Zielgerät (61) in einem flüchtigen zweiten Speicher gespeichert werden, wobei die Ausgabe der Daten (15) über das Zielgerät (61) erfolgt, während die Daten (15) im zweiten Speicher gespeichert vorliegen, und die Daten (15) nach der Ausgabe und/ oder nach einer festgelegten Zeitspanne aus dem zweiten Speicher gelöscht werden.

2. Verfahren nach Anspruch 1, **dadurch gekennzeichnet, dass**
- das Zielgerät (61) keine mit Energie versorgte Netzwerk-Hardware aufweist,
- es sich beim Empfänger um ein Mikrofon handelt und die verschlüsselten Daten (19) in der Form von Schallwellen via die Schnittstelle (63) an das Zielgerät (61) übermittelt werden, oder es sich beim Empfänger um eine Kamera oder einen Barcode-Scanner handelt und die verschlüsselten Daten (19) in der Form von elektromagnetischen Wellen, insbesondere Licht, via die Schnittstelle (63) an das Zielgerät (61) übermittelt werden,
- die verschlüsselten Daten (19) vor dem Entschlüsseln (21) in einem ersten Speicher des Zielgeräts (61) gespeichert werden,
- eine Smartcard (65) mit dem Zielgerät (61) verbunden wird, wobei zum Entschlüsseln (21) der verschlüsselten Daten (19) ein auf der Smartcard (65) gespeicherter kryptographischer Schlüssel verwendet wird,
- die Daten (15) nach dem Entschlüsseln (21) in entschlüsselter Form im Zielgerät (61) in einem zweiten Speicher gespeichert werden, wobei es sich beim zweiten Speicher um einen flüchtigen Speicher handelt,
- die Daten (15) nach dem Entschlüsseln (21) in entschlüsselter Form im Zielgerät (61) nicht in einem nicht-flüchtigen Speicher gespeichert werden,
- die Ausgabe der Daten (15) über das Ziel gerät (61) erfolgt, während die Daten (15) im zweiten Speicher gespeichert vorliegen, und die Daten (15) nach der Ausgabe aus dem zweiten Speicher gelöscht werden, und
- das Zielgerät (61) ein Display aufweist und die Ausgabe der Daten (15) als Darstellung auf dem Display erfolgt und/oder das Zielgerät (61) einen Lautsprecher aufweist und die Ausgabe der Daten (15) als Tonfolge, beispielsweise als Sprache, erfolgt und/oder das Zielgerät (61) einen Drucker aufweist und die Ausgabe der Daten (15) in Form eines Druckerzeugnisses erfolgt.

3. Verfahren nach Anspruch 1, **dadurch gekennzeichnet, dass**
- die verschlüsselten Daten (19) in der Form eines Signals über die Schnittstelle (63) an das Zielgerät (61) übermittelt werden, wobei der Empfänger zum berührungslosen Empfang des Signals ausgebildet ist, und/oder
- die verschlüsselten Daten (19) in der Form von Wellen über die Schnittstelle (63) an das Zielgerät (61) übermittelt werden, wobei es sich bei den Wellen vorzugsweise um Schallwellen oder elektromagnetische Wellen, insbesondere Licht, handelt, und
- die verschlüsselten Daten (19) vorzugsweise in einer durch menschliche Sinne, insbesondere durch Hören oder Sehen, berührungslos wahrnehmbaren Form über die Schnittstelle (63) an das Zielgerät (61) übermittelt werden.

4. Verfahren nach einem der Ansprüche 1 oder 3, **dadurch gekennzeichnet, dass** es sich beim Empfänger um ein Mikrofon oder eine Kamera oder einen Barcode-Scanner handelt.

5. Verfahren nach Anspruch 4, **dadurch gekennzeichnet, dass**
- es sich beim Empfänger um eine Kamera oder einen Barcode-Scanner handelt,
- vor dem Übermitteln der verschlüsselten Daten (19) über die Schnittstelle (63) die verschlüsselten Daten (19) in ein 2D-Barcode-Format umgewandelt werden, wobei es sich beim 2D-Barcode-Format vorzugsweise um ein Matrix-Code-Format, insbesondere ein QR-Code-Format, handelt und
- die verschlüsselten Daten (19) in der Form eines oder einer Sequenz mehrerer 2D-Barcodes mittels der Kamera oder des Barcode-Scanners aufgenommen werden.

6. Verfahren, nach einem der Ansprüche 1 oder 3 bis 5, **dadurch gekennzeichnet, dass**
- zum Entschlüsseln (21) der Daten (19) ein auf einem Chip gespeicherter kryptographischer Schlüssel benutzt wird, wobei der Chip einen Mikroprozessor aufweist, welcher dazu ausgebildet und/oder programmiert ist das Kopieren des kryptographischen Schlüssels vom Chip zu verhindern, wobei es sich beim Chip vorzugsweise um einen Chip einer Prozessorchipkarte, insbesondere einen Chip einer Smartcard (65), handelt,
- der Chip zu diesem Zweck vor dem Entschlüsseln (21) mit dem Zielgerät (61) verbunden und vorzugsweise nach der Ausgabe der Daten (15) über das Zielgerät (61) vom Zielgerät (61) getrennt wird, und
- der kryptographische Schlüssel auf dem Chip vor seiner Benutzung durch Eingabe oder Scannen eines oder mehrerer Identifikationsmerkmale, insbesondere eines Passworts und/oder eines oder mehrerer biometrischen Merkmale, benutzbar gemacht wird.

7. Verfahren, nach einem der Ansprüche 1 oder 3 bis 5, **dadurch gekennzeichnet, dass**
- zum Verschlüsseln (17) der Daten (15) ein auf einem Chip gespeicherter kryptographischer Schlüssel benutzt wird, wobei der Chip einen Mikroprozessor aufweist, welcher dazu ausgebildet und/oder programmiert ist, das Kopieren des kryptographischen Schlüssels vom Chip zu verhindern, wobei es sich beim Chip vorzugsweise um einen Chip einer Prozessorchipkarte, insbesondere einen Chip einer Smartcard (65), handelt,
- der Chip zu diesem Zweck vor dem Verschlüsseln (17) mit dem Quellgerät (41) verbunden wird, und
- der kryptographische Schlüssel auf dem Chip vor seiner Benutzung durch Eingabe oder Scannen eines oder mehrerer Identifikationsmerkmale, insbesondere eines Passworts und/oder eines oder mehrerer biometrischer Merkmale, benutzbar gemacht wird.

8. Verfahren nach einem der Ansprüche 1 oder 3 bis 7, **dadurch gekennzeichnet, dass**
- das Zielgerät (61) ein Display aufweist und die Ausgabe der Daten (15) als Darstellung auf dem Display erfolgt, und/oder
- das Zielgerät (61) einen Lautsprecher aufweist und die Ausgabe der Daten (15) als Ton oder Tonfolge erfolgt, und/oder
- das Zielgerät (61) einen Drucker aufweist und die Ausgabe der Daten (15) als Darstellung auf einem Druckerzeugnis erfolgt.

9. Verfahren nach einem der Ansprüche 1 oder 3 bis 8, **dadurch gekennzeichnet, dass** das Zielgerät (61) keine mit Energie versorgten elektronischen Schaltungen zur Verbindung mit einem Netzwerk zum Austausch von Daten, und/oder keine mit Energie versorgte Netzwerk-Hardware aufweist.

10. Verfahren nach einem der Ansprüche 1 oder 3 bis 9, **dadurch gekennzeichnet, dass** die verschlüsselten Daten (19) über ein Netzwerk zum Austausch von Daten, insbesondere über das Internet, vom Quellgerät (41) an ein Zwischengerät (47) übermittelt werden und danach vom Zwischengerät (47) an das Zielgerät (61) über die Schnittstelle (63) übermittelt werden, wobei der Sender der Schnittstelle (63) Teil des Zwischengeräts (47) ist.

11. Verfahren nach einem der Ansprüche 1 oder 3 bis 10, **dadurch gekennzeichnet, dass** die Ausgabe der Daten (15) in einer durch unberechtigte Personen nicht zugänglichen und/oder nicht einsehbaren Umgebung erfolgt.

12. Verfahren nach einem der Ansprüche 1 bis 11, **dadurch gekennzeichnet, dass**
- zusätzliche Daten vom Zielgerät (61) an ein Gerät übermittelt werden, wobei es sich beim Gerät vorzugsweise um das Zwischengerät (47) oder das Quellgerät (41) handelt,
- die zusätzlichen Daten mittels eines kryptographischen Verfahrens auf dem Zielgerät (61) verschlüsselt werden,
- die verschlüsselten zusätzlichen Daten an das Gerät über eine zweite Schnittstelle übermittelt werden, wobei die zweite Schnittstelle einen Sender und einen Empfänger aufweist, der Sender Teil des Zielgeräts (61) ist, der Empfänger Teil des Geräts ist und es sich bei der zweiten Schnittstelle um eine unidirektionale Schnittstelle handelt.

13. Verfahren nach Anspruch 12, **dadurch gekennzeichnet, dass**
- zum Verschlüsseln der zusätzlichen Daten ein auf einem Chip gespeicherter kryptographischer Schlüssel benutzt wird, wobei der Chip einen Mikroprozessor aufweist, welcher dazu ausgebildet und/oder programmiert ist, das Kopieren des kryptographischen Schlüssels vom Chip zu verhindern, wobei es sich beim Chip vorzugsweise um einen Chip einer Prozessorchipkarte, insbesondere einen Chip einer Smartcard, handelt,
- der Chip zu diesem Zweck vor dem Verschlüsseln der zusätzlichen Daten mit dem Zielgerät (61) verbunden wird, und
- der kryptographische Schlüssel auf dem Chip vor seiner Benutzung durch Eingabe oder Scannen eines oder mehrerer Identifikationsmerkmale, insbesondere eines Passworts und/oder eines oder mehrerer biometrischer Merkmale, benutzbar gemacht wird.

14. System (31) zur Durchführung des Verfahrens nach einem der Ansprüche 1 bis 13 beinhaltend ein Quellgerät (41) und ein Zielgerät (61).

## Claims

1. Method for the transmission of date from a source device (41) to a target device (61) comprising the steps:
- encrypt (17) the data (15) on the source device (41) by means of a cryptographic method,
- transmission of the encrypted data (19) to the target device (61) over an interface that has an emitter and a receiver, wherein the receiver is a part of the target device (61) and the matter is for the interface of a unidirectional interface,
- decrypt (21) the encrypted data (19) on the target device (61),
**characterized in that**
- the encrypted data (19) are stored in a non-volatile first storage of the target device (61), wherein the encrypted data (19) in the first storage are preferably deleted by the target device (61) after a predetermined time,
- the data (15) are stored in decrypted form in the target device (61) in a volatile second storage, wherein the output of the data (15) takes place over the target device (61), while the data (15) are available stored in the second storage and the data (15) are deleted from the second storage after the output and/or after a predetermined period of time.

2. Method according to claim 1, **characterized in that**
- the target device (61) does not have any network hardware supplied with energy,
- the matter is, for the receiver, of a microphone and the encrypted data (19) are transmitted to the target device (61) in the form of acoustic waves via the interface (63) or the matter is, for the receiver, of a camera or of a barcode scanner and the encrypted data (19) are transmitted to the target device (61) in the form of electromagnetic waves, in particular of light,
- the encrypted data (19) are stored prior to decrypting (21) in a first storage of the target device (61),
- a smart card (65) is connected to the target device (61), wherein a cryptographic key stored on the smart card (65) is used for decrypting (21) the encrypted data (19),
- the data (15) are stored after decrypting (21) in the target device (61) in a second storage in a decrypted form, wherein the matter is, for the second storage, of a volatile storage,
- the data (15) are not stored after decrypting (21) in a decrypted form in a non-volatile storage in the target device (61),
- the output of the data (15) takes place over the target device (61), while data (15) are available stored in the second storage and the data (15) are deleted after the output from the second storage and
- the target device (61) has a display and the output of the data (15) takes place as a representation on the display and/or the target device (61) has a loudspeaker and the output of the data (15) takes place as a ton sequence, for example as voice and/or the target device (61) has a printer and the output of the data (15) takes place as printed matter.

3. Method according to claim 1, **characterized in that**
- the encrypted data (19) are transmitted as a signal to the target device (61) over the interface (63), wherein the receiver is designed for the contactless reception of the signal and/or
- the encrypted data (19) are transmitted as waves to the target device (61) over the interface (63), wherein the matter is, for the waves, preferably of acoustic waves or of electromagnetic waves, in particular of light, and
- the encrypted data (19) are transmitted to the target device over the interface (63) preferably in a contactless perceptible form through human senses, in particular through hearing or seeing.

4. Method according to one of the claims 1 or 3, **characterized in that** the matter is, for the receiver, of a camera or of a barcode scanner.

5. Method according to claim 4, **characterized in that**
- the matter is, for the receiver, of a camera or of a barcode scanner,
- the encrypted data (19) are converted to a 2D barcode format before the transmission of the encrypted data (19) over the interface (63), wherein the matter is, for the 2D barcode format, preferably of a matrix code format, in particular of a QR code format and
- the encrypted data (19) are recorded in the form of one or a sequence of several 2D barcodes by means of the camera or of the barcode scanner.

6. Method according to one of the claims 1 or 3 to 5, **characterized in that**
- a cryptographic key stored on a chip is used for decrypting (21) the data (19), wherein the chip has a microprocessor that is designed and/or programmed to prevent copying the cryptographic key from the chip, wherein the matter is, for the chip, preferably of a chip of a processor chip card, in particular of a chip of a smart card (65),
- the chip is connected to this purpose before decrypting (21) to the target device (62) and is preferably separated from the target device (61) after the output of the data (15) over the target device (61) and
- the cryptographic key on the chip is made usable before using thereof by entering or scanning one or several identification features, in particular of a password and/or of one or several biometric features.

7. Method according to one of the claims 1 or 3 to 5, **characterized in that**
- a cryptographic key stored on a chip is used for decrypting (21) the data (19), wherein the chip has a microprocessor that is designed and/or programmed to prevent copying the cryptographic key from the chip, wherein the matter is, for the chip, preferably of a chip of a processor chip card, in particular of a chip of a smart card (65),
- the chip is connected to this purpose before decrypting (21) to the target device (62) and
- the cryptographic key on the chip is made usable before using thereof by entering or scanning one or several identification features, in particular of a password and/or of one or several biometric features.

8. Method according to one of the claims 1 or 3 to 7, **characterized in that**
- the target device (61) has a display and the output of the data (15) takes place as a representation on the display and/or
- the target device (61) has a loudspeaker and the output of the data (15) takes place as a ton sequence, for example as voice and/or
- the target device (61) has a printer and the output of the data (15) takes place as printed matter.

9. Method according to one of the claims 1 or 3 to 8, **characterized in that** the target device (61) has no electronic circuits supplied with energy for connecting to a network for the exchange of data and/ or no network hardware supplied with energy.

10. Method according to one of the claims 1 or 3 to 9, **characterized in that** the encrypted data (19) are transmitted from the source device (41) to an intermediate device (47) over a network for exchanging data, in particular over the internet and that they are then transmitted by the intermediate device (47) to the target device (61) over the interface (63), wherein the emitter of the interface (63) is part of the intermediate device (47).

11. Method according to one of the claims 1 or 3 to 10, **characterized in that** the output of the data (15) takes places in an environment non accessible and/or not visible by unauthorized individuals.

12. Method according to one of the claims 1 to 11, **characterized in that**
- additional data are transmitted from the target device (61) to a device, wherein the matter is, for the device, preferably of the intermediate device (47) or of the source device (41),
- the additional data are encrypted on the target device (61) by means of a cryptographic method,
- the additional encrypted data are transmitted to the device by a second interface, wherein the second interface has an emitter and a receiver, the emitter is part of the target device (61), the receiver is part of the device and the matter is, for the second interface, of a unidirectional interface.

13. Method according to claim 12, **characterized in that**
- a cryptographic key stored on a chip is used for decrypting (21) the data (19), wherein the chip has a microprocessor that is designed and/or programmed to prevent copying the cryptographic key from the chip, wherein the matter is, for the chip, preferably of a chip of a processor chip card, in particular of a chip of a smart card (65),
- the chip is connected to this purpose before decrypting (21) to the target device (62) and
- the cryptographic key on the chip is made usable before using thereof by entering or scanning one or several identification features, in particular of a password and/or of one or several biometric features.

14. System (31) for carrying out the method according to one of the claims 1 to 13 comprising a source device (41) and a target device (61).

## Revendications

1. Procédé pour la transmission de données d'un appareil source (41) à un appareil cible (61) comprenant les étapes :
- cryptage (17) des données (15) sur l'appareil source (41) au moyen d'un procédé cryptographique,
- transmission des données cryptées (19) à l'appareil cible (61) par une interface qui présente un émetteur et un récepteur, cependant que le récepteur est une partie de l'appareil cible (61) et qu'il s'agit, pour l'interface, d'une interface unidirectionnelle,
- décryptage (21) des données cryptées (19) sur l'appareil cible (61), **caractérisé en ce que**
- les données cryptées (19) sont stockées dans une première mémoire non volatile de l'appareil cible (61), les données cryptées (19) dans la première mémoire étant de préférence effacées par l'appareil cible (61) après un temps prédéterminé,
- les données (15) étant mémorisées sous forme cryptée dans l'appareil cible (61) dans une seconde mémoire volatile, cependant que la sortie des données (15) se fait par l'appareil cible (61), tandis que les données (15) sont présentes dans la seconde mémoire et les données (15) sont effacées de la seconde mémoire après la sortie et/ou après une période de temps fixée.

2. Procédé selon la revendication 1, **caractérisé en ce que**
- l'appareil cible (61) ne présente pas de matériel réseau alimenté en énergie,
- qu'il s'agit, pour le récepteur, d'un microphone et que les données cryptées (19) sont transmises à l'appareil cible (61) par l'intermédiaire de l'interface (63) sous forme d'ondes acoustiques ou qu'il s'agit, pour le récepteur, d'une caméra ou d'un scanner de codes-barres et que les données cryptées (19) sont transmises à l'appareil cible (61) par l'intermédiaire de l'interface (63) sous forme d'ondes électromagnétiques, en particulier de lumière,
- les données cryptées (19) sont mémorisées avant le décryptage (21) dans une première mémoire de l'appareil cible (61),
- qu'une carte à puce (65) est reliée à l'appareil cible (61), cependant qu'une clé cryptographique mémorisée sur la carte à puce (65) est utilisée pour le décryptage (21) des données cryptées (19),
- les données (15) sont mémorisées après le décryptage (21) sous forme décryptée dans l'appareil cible (61) dans une seconde mémoire, cependant qu'il s'agit, pour la seconde mémoire, d'une mémoire volatile,
- les données (15) sont mémorisées après le décryptage (21) sous forme décryptée dans l'appareil cible (61) dans une seconde mémoire non volatile,
- la sortie des données (15) se fait par l'appareil cible (61), tandis que les données (15) sont présentes mémorisées dans la seconde mémoire et les données (15) sont effacées de la seconde mémoire après la sortie et
- l'appareil cible (61) présente un écran et la sortie des données (15) se fait en tant que représentation sur l'écran et/ou l'appareil cible (61) présente un haut-parleur et la sortie des données (15) se fait comme succession de sons, par exemple en tant que langage, et/ou l'appareil cible (61) présente une imprimante et la sortie des données (15) se fait sous forme de produit imprimé.

3. Procédé selon la revendication 1, **caractérisé en ce que**
- les données cryptées (19) sont transmises à l'appareil cible (61) par l'interface (63) sous forme de signal, le récepteur étant conçu pour la réception sans contact du signal et/ou
- les données cryptées (19) sont transmises à l'appareil cible (61) par l'interface (63) sous forme d'ondes, cependant qu'il s'agit, pour les ondes, de préférence d'ondes acoustiques ou d'ondes électromagnétiques, en particulier de lumière, et
- les données cryptées (19) sont transmises à l'appareil cible (61) par l'interface (63) de préférence sous forme perceptible sans contact par les sens humains, en particulier par l'audition ou la vue.

4. Procédé selon l'une des revendications 1 ou 3, **caractérisé en ce qu'**il s'agit, pour le récepteur, d'un microphone ou d'une caméra ou d'un scanner de codes-barres.

5. Procédé selon la revendication 4, **caractérisé en ce**
- **qu'**il s'agit, pour le récepteur, d'une caméra ou d'un scanner de codes-barres,
- **que** les données cryptées (19) sont transformées, avant la transmission des données cryptées (19) par l'interface (63), en un format de codes-barres 2D, cependant qu'il s'agit, pour le format de codes-barres 2D, d'un format de code matrice, en particulier d'un format de code QR et
- **que** les données cryptées (19) sont enregistrées par la caméra ou le scanner de codes-barres sous forme de code-barres 2D ou d'une séquence de plusieurs codes-barres 2D.

6. Procédé selon l'une des revendications 1 ou 3 à 5, **caractérisé en ce**
- **qu'**une clé cryptographique mémorisée sur une puce est utilisée pour le décryptage (21) des données (19), cependant que la puce présente un microprocesseur qui est conçu et/ou programmé pour empêcher la copie de la clé cryptographique de la puce, cependant qu'il s'agit, pour la puce, de préférence, d'une puce d'une carte à puce avec processeur, en particulier d'une puce de carte à puce (65),
- la puce est reliée, à cet effet, avant le décryptage (21), à l'appareil cible (61) et est séparée de l'appareil cible (61), de préférence après la sortie des données (15) par l'appareil cible (61), et
- la clé cryptographique sur la puce est rendue utilisable, avant son utilisation, par l'entrée ou le scannage d'un ou de plusieurs éléments d'identification, en particulier d'un mot de passe et/ou d'un ou de plusieurs éléments biométriques.

7. Procédé selon l'une des revendications 1 ou 3 à 5, **caractérisé en ce**
- **qu'**une clé cryptographique mémorisée sur une puce est utilisée pour le décryptage (21) des données (19), cependant que la puce présente un microprocesseur qui est conçu et/ou programmé pour empêcher la copie de la clé cryptographique de la puce, cependant qu'il s'agit, pour la puce, de préférence, d'une puce d'une carte à puce avec processeur, en particulier d'une puce de carte à puce (65),
- la puce est reliée, à cet effet, avant le décryptage (21), à l'appareil cible (61) et
- la clé cryptographique sur la puce est rendue utilisable, avant son utilisation, par l'entrée ou le scannage d'un ou de plusieurs éléments d'identification, en particulier d'un mot de passe et/ou d'un ou de plusieurs éléments biométriques.

8. Procédé selon l'une des revendications 1 ou 3 à 7, **caractérisé en ce que**
- l'appareil cible (61) présente un écran et la sortie des données (15) se fait en tant que représentation sur l'écran et/ou
- l'appareil cible (61) présente un haut-parleur et la sortie des données (15) se fait comme son ou succession de sons et/ou
- l'appareil cible (61) présente une imprimante et la sortie des données (15) se fait sous forme de produit imprimé.

9. Procédé selon l'une des revendications 1 ou 3 à 8, **caractérisé en ce que** l'appareil cible (61) ne présente pas de circuits électroniques alimentés en énergie pour la connexion avec un réseau pour l'échange de données et/ou pas de matériel réseau alimenté en énergie.

10. Procédé selon l'une des revendications 1 ou 3 à 9, **caractérisé en ce que** les données cryptées (19) sont transmises par l'appareil source (41) à un appareil intermédiaire (47) par un réseau pour l'échange de données, par exemple par internet, et sont ensuite transmises par l'appareil intermédiaire (47) à l'appareil cible (61) par l'interface (63), l'émetteur de l'interface (63) étant une partie de l'appareil intermédiaire (47).

11. Procédé selon l'une des revendications 1 ou 3 à 10, **caractérisé en ce que** la sortie des données (15) se fait dans un environnement qui n'est pas accessible et/ou n'est pas visible par des personnes non autorisées.

12. Procédé selon l'une des revendications 1 à 11, **caractérisé en ce que**
- des données supplémentaires sont transmises par l'appareil cible (61) à un appareil, cependant qu'il s'agit, pour l'appareil, de préférence, de l'appareil intermédiaire (47) ou de l'appareil source (41),
- les données supplémentaires sont cryptées sur l'appareil cible (61) au moyen d'un procédé cryptographique,
- les données supplémentaires cryptées sont transmises à l'appareil par une seconde interface, cependant que la seconde interface présente un émetteur et un récepteur, l'émetteur est une partie de l'appareil cible (61), le récepteur est une partie de l'appareil et qu'il s'agit, pour la seconde interface, d'une interface unidirectionnelle.

13. Procédé selon la revendication 12, **caractérisé en ce**
- **qu'**une clé cryptographie mémorisée sur une puce est utilisée pour le cryptage des données supplémentaires, la puce présentant microprocesseur qui est conçu et/ou programmé pour empêcher la copie de la clé cryptographique de la puce, cependant qu'il s'agit, pour la puce, de préférence, d'une puce d'une carte à puce avec processeur, en particulier d'une puce de carte à puce,
- la puce est reliée, à cet effet, avant le décryptage des données supplémentaires, à l'appareil cible (61) et
- la clé cryptographique sur la puce est rendue utilisable, avant son utilisation, par l'entrée ou le scannage d'un ou de plusieurs éléments d'identification, en particulier d'un mot de passe et/ou d'un ou de plusieurs éléments biométriques.

14. Système (31) pour l'exécution du procédé selon l'une des revendications 1 à 13 qui contient un appareil source (41) et un appareil cible (61).
